# EUROPEAN PATENT APPLICATION

(11) **EP 4 498 488 A1**
(43) Date of publication of application: **29.01.2025**
(21) Application number: 23778399.8
(22) Date of filing: 30.03.2023
(51) Int. Cl.: H01M 50/15

(54) **END COVER, BATTERY CELL, BATTERY, AND ELECTRIC DEVICE**

(30) Priority: 02.04.2022 CN 202220770287 U
(71) Applicant: Contemporary Amperex Technology (Hong Kong) Limited, Hong Kong (HK)
(72) Inventor: CHEN, Long, Ningde, Fujian 352100 (CN); LIN, Denghua, Ningde, Fujian 352100 (CN); ZHENG, Yulian, Ningde, Fujian 352100 (CN); WANG, Peng, Ningde, Fujian 352100 (CN); JIN, Haizu, Ningde, Fujian 352100 (CN)
(74) Representative: Ran, Handong
(86) International application number: PCT/CN2023/085200
(87) International publication number: WO 2023/186034

(57) **Abstract**

Provided are an end cap, a battery cell, a battery, and an electrical device. The end cap comprises: a body portion (2121); and an edge portion (2122), the edge portion (2122) being connected to the body portion (2121) and surrounding the body portion (2121), the edge portion (2122) protruding in a first direction with respect to the body portion (2121), and the first direction being a thickness direction of the body portion (2121), wherein the edge portion (2122) comprises a lap portion (2124), the lap portion (2124) protrudes out of the body portion (2121) in a second direction and comprises a first surface (2124a), the first surface (2124a) is perpendicular to the first direction and is used for being in lap joint with a housing (211) of the battery cell, and the second direction is perpendicular to the first direction. The technical solution of the present application facilitates improvement of the sealing performance of the battery cell.

## Description

### CROSS-REFERENCE TO RELATED APPLICATIONS

This application claims priority to Chinese Patent Application No. 202220770287.6, filed on April 2, 2022 and entitled "END CAP, BATTERY CELL, BATTERY, AND ELECTRICAL DEVICE", which is incorporated herein by reference in its entirety.

### TECHNICAL FIELD

This application relates to the technical field of batteries, and in particular, to an end cap, a battery cell, a battery, and an electrical device.

### BACKGROUND

Energy conservation and emission reduction are key to sustainable development of the automobile industry. Based on this situation, electric vehicles have become an important part of the sustainable development of the automobile industry by virtue of energy saving and environmental friendliness. Battery technology is crucial to development of electric vehicles.

The connection between an end cap in a battery cell and a housing of the battery cell affects the hermeticity of the battery cell, and in turn, affects the performance of the battery. Therefore, how to provide an end cap to improve the sealing performance of the battery cell is a pressing challenge.

### SUMMARY

Some embodiments of this application provide an end cap, a battery cell, a battery, and an electrical device to improve the sealing performance of the battery cell.

According to a first aspect, an embodiment of this application provides an end cap. The end cap includes a body portion and an edge portion. The edge portion is connected to the body portion and surrounds the body portion. The edge portion protrudes beyond the body portion along a first direction. The first direction is a thickness direction of the body portion. The edge portion includes a lap portion. The lap portion protrudes beyond the body portion along a second direction. The lap portion includes a first surface. The first surface is perpendicular to the first direction. The first surface is configured to lap a housing of the battery cell. The second direction is perpendicular to the first direction.

In this embodiment of this application, the end cap of the battery cell includes a body portion and an edge portion. The edge portion is connected to the body portion and surrounds the body portion. The edge portion protrudes beyond the body portion along the thickness direction of the body portion. The lap portion of the edge portion protrudes along a direction perpendicular to the thickness direction of the body portion. The first surface of the lap portion laps the housing of the battery cell. In this way, the end cap is connected to the housing of the battery cell to improve the sealing performance of the battery cell.

In a possible embodiment, the lap portion further includes a second surface. The second surface is perpendicular to the first surface. When the first surface laps the housing, the second surface is flush with an outer surface of the housing. This facilitates the connection between the second surface and the outer surface of the housing, and further improves the hermeticity between the end cap and the housing.

In a possible embodiment, a dimension r of the lap portion along the second direction and a dimension s of the lap portion along the first direction satisfy: 0.1 mm ≤ r ≤ 1 mm and 0.1 mm ≤ s ≤ 2 mm, respectively. This makes it convenient to form the lap portion by stamping, and increases the structural strength of the lap portion.

In a possible embodiment, the edge portion further includes a connecting portion. The connecting portion connects the body portion and the lap portion. A first groove is provided at one end, close to the connecting portion, of the first surface. During the production of the end cap, a fillet is generated at one end, close to the connecting portion, of the first surface. The housing of the battery cell interferes with the fillet, thereby impairing the connection performance between the second surface and the outer surface of the housing. The first groove can improve the connection performance between the second surface and the outer surface of the housing, and further improve the sealing performance of the battery cell.

In a possible embodiment, a dimension w of the first groove along the second direction and a dimension p of the first groove along the first direction satisfy: 0.01 mm ≤ w ≤ 0.5 mm and 0.01 mm ≤ p ≤ 0.5 mm, respectively. This facilitates the processing of the first groove and increases the structural strength of the edge portion.

In a possible embodiment, the body portion includes a boss protruding along the first direction. A protruding direction of the boss is identical to a protruding direction of the edge portion.

In a possible embodiment, the body portion includes a through-hole. The through-hole is configured to accommodate an electrode terminal. Two bosses are disposed opposite to each other along a radial direction of the through-hole. The position and movement of the electrode terminal are constrained by the bosses.

In a possible embodiment, a third groove and a fourth groove corresponding to the boss respectively are provided on one side, oriented away from the boss, of the body portion. The third groove and the fourth groove form a step structure. A diameter of the third groove is less than a diameter of the boss. The diameter of the boss is less than a diameter of the fourth groove. This increases the structural strength of the boss.

In a possible embodiment, the second surface is connected to the outer surface of the housing by welding. This increases the connection strength between the second surface and the outer surface of the housing.

In a possible embodiment, the end cap is a steel cover with a thickness of 0.2 mm to 2 mm. In this way, more battery cells that contains a steel cover can be accommodated in a space of the same volume, thereby increasing the energy density of the battery.

In a possible embodiment, a thickness of the end cap is 0.8 mm. In this way, both high strength of the end cap and a high energy density of the battery can be achieved.

According to a second aspect, an embodiment of this application provides a battery cell. The battery cell includes: an electrode assembly; a housing, including an opening and configured to accommodate the electrode assembly; and the end cap according to the first aspect or any one of possible embodiments of the first aspect. The end cap is configured to cover the opening and seal the electrode assembly in the housing.

In a possible embodiment, the housing is a steel casing with a thickness of 0.2 mm to 2 mm.

According to a second aspect, an embodiment of this application provides a battery. The battery includes: the battery cell according to the first aspect or any one of possible embodiments of the first aspect; and a box, configured to accommodate the battery cell.

According to a third aspect, an embodiment of this application provides an electrical device. The electrical device includes the battery according to the second aspect or any one of possible embodiments of the second aspect. The battery is configured to provide electrical energy.

In this embodiment of this application, the end cap of the battery cell includes a body portion and an edge portion. The edge portion is connected to the body portion and surrounds the body portion. The edge portion protrudes beyond the body portion along the thickness direction of the body portion. The lap portion of the edge portion protrudes along a direction perpendicular to the thickness direction of the body portion. The first surface of the lap portion laps the housing of the battery cell. In this way, the end cap is connected to the housing of the battery cell to improve the sealing performance of the battery cell.

### BRIEF DESCRIPTION OF DRAWINGS

To describe the technical solutions of some embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.
FIG. 1 is a schematic diagram of a vehicle according to an embodiment of this application;
FIG. 2 is a schematic diagram of a battery according to an embodiment of this application;
FIG. 3 is a schematic diagram of a battery cell according to an embodiment of this application;
FIG. 4 is a schematic diagram of an end cap of a battery cell according to an embodiment of this application;
FIG. 5 is a cross-sectional view of an end cap sectioned along an A-A line shown in FIG. 4;
FIG. 6 is a close-up view of a region C shown in FIG. 5;
FIG. 7 is a schematic diagram of an end cap according to an embodiment of this application;
FIG. 8 is a schematic diagram of an end cap without a first groove according to an embodiment of this application;
FIG. 9 is a schematic diagram of interference between an end cap and a housing of a battery cell according to an embodiment of this application;
FIG. 10 is a schematic diagram of a fit between an end cap with a first groove and a housing of a battery cell according to an embodiment of this application;
FIG. 11 is a schematic diagram of an end cap according to an embodiment of this application;
FIG. 12 is a cross-sectional view of an end cap sectioned along a B-B line shown in FIG. 11;
FIG. 13 is a close-up view of a region D shown in FIG. 12;
FIG. 14 is a schematic diagram of an end cap assembly according to an embodiment of this application;
FIG. 15 is a cross-sectional view of an end cap assembly according to an embodiment of this application;
FIG. 16 is a schematic diagram of connection between a housing and an end cap in the related art; and
FIG. 17 is a schematic diagram of connection between a housing and an end cap according to an embodiment of this application.

### DETAILED DESCRIPTION OF EMBODIMENTS

The following gives a more detailed description of implementations of this application with reference to drawings and embodiments. The detailed description of the following embodiments and drawings are intended to describe the principles of this application illustratively, but not to limit the scope of this application. Therefore, this application is not limited to the described embodiments.

In the description of this application, unless otherwise specified, "a plurality of" means at least two in number; the terms such as "up", "down", "left", "right", "in", and "out" indicating a direction or a position relationship are merely intended for ease or brevity of description of this application, but do not indicate or imply that the mentioned device or component is necessarily located in the specified direction and position or constructed or operated in the specified direction and position. Therefore, such terms are not to be understood as a limitation on this application. In addition, the terms "first", "second", "third", and so on are merely used for descriptive purposes, but not construed as indicating or implying relative importance. "Perpendicular" does not means exact perpendicularity, but means perpendicularity falling within an error tolerance range. "Parallel" does not mean exact parallelism, but means parallelism falling within an error tolerance range.

The directional terms appearing in the following description indicate the directions shown in the drawings, but are not intended to limit specific structures in this application. In the description of this application, unless otherwise expressly specified, the terms "mount", "concatenate", and "connect" are understood in a broad sense. For example, a "connection" may be a fixed connection, a detachable connection, or an integrated connection, and may be a direct connection or an indirect connection implemented through an intermediary. A person of ordinary skill in the art can understand the specific meanings of the terms in this application according to specific situations.

The term "and/or" in this application indicates merely a relation for describing the related items, and represents three possible relationships. For example, "A and/or B" may represent the following three circumstances: A alone, both A and B, and B alone. In addition, the character "/" herein generally indicates an "or" relationship between the item preceding the character and the item following the character.

In some embodiments of this application, the same reference numeral denotes the same component. For brevity, detailed descriptions of the same component are omitted in a different embodiment. Understandably, dimensions such as thickness, length, and width of various components in some embodiments of this application shown in the drawings, and dimensions such as overall thickness, length, and width of an integrated device are merely illustrative descriptions, but do not constitute any limitation on this application.

"A plurality of" referred to in this application means two or more (including two).

In this application, a battery cell may include a lithium-ion secondary battery, a lithium-ion primary battery, a lithium-sulfur battery, a sodium-lithium-ion battery, a sodium-ion battery, a magnesium-ion battery, or the like, without being limited in embodiments of this application. The battery cell may be in various shapes such as cylindrical, flat, cuboidal or other shapes. The shape of the battery cell is not limited herein. In terms of the packaging form, the battery cell is typically classed into three types: cylindrical battery cell, prismatic battery cell, and pouch-type battery cell. The type of the battery cell is not limited herein.

The battery mentioned in embodiments of this application means a unitary physical module that includes one or more battery cells to provide a higher voltage and a higher capacity. For example, the battery mentioned in this application may include a battery module, a battery pack, or the like. A battery typically includes a box configured to package one or more battery cells. The box prevents liquid or other foreign matters from affecting the charging or discharging of the battery cells.

A battery cell includes an electrode assembly and an electrolyte solution. The electrode assembly includes a positive electrode plate, a negative electrode plate, and a separator. The battery cell works primarily by relying on shuttling of metal ions between the positive electrode plate and the negative electrode plate. The positive electrode plate includes a positive current collector and a positive active material layer. A surface of the positive current collector is coated with the positive active material layer. Of the current collector, a part not coated with the positive active material layer protrudes from a part coated with the positive active material layer, and the part not coated with the positive active material layer serves as a positive tab. Using a lithium-ion battery as an example, the positive current collector may be made of aluminum, and a positive active material may be lithium cobalt oxide, lithium iron phosphate, ternary lithium, lithium manganese oxide, or the like. The negative electrode plate includes a negative current collector and a negative active material layer. A surface of the negative current collector is coated with the negative active material layer. Of the current collector, a part not coated with the negative active material layer protrudes from a part coated with the negative active material layer, and the part not coated with the negative active material layer serves as a negative tab. The negative current collector may be made of copper, and a negative active material may be carbon, silicon, or the like. To prevent a large electrical current from tripping the circuit, a plurality of positive tabs are stacked together, and a plurality of negative tabs are stacked together. The separator may be made of polypropylene (PP), polyethylene (PE), or another material. In addition, the electrode assembly may be of a jelly-roll type structure or a stacked type structure, without being limited herein.

A box of a battery in an embodiment of this application is configured to accommodate a plurality of battery cells, a busbar component, and other components of the battery. In some embodiments, a structure configured to fix the battery cell may be further disposed in the box. The shape of the box may depend on the shape of the plurality of battery cells to be accommodated in the box. In some embodiments, the box may be in a quadrangular shape with six walls.

The busbar component referred to herein is configured to implement electrical connection between the plurality of battery cells, such as parallel connection, series connection, or series-and-parallel connection. The busbar component may implement electrical connection between the battery cells by connecting electrode terminals of the battery cells. In some embodiments, the busbar component may be fixed to the electrode terminals of the battery cell by welding.

The end cap of the battery cell is typically connected to the housing of the battery cell by lapping a step structure of the housing of the battery cell. However, when it is difficult for the housing of the battery cell to form a step-shaped structure, the connection between the end cap and the housing is difficult to implement, thereby impairing the sealing performance of the battery cell.

In view of this, an embodiment of this application provides an end cap applicable to a battery cell. The end cap includes a body portion and an edge portion. The edge portion is connected to the body portion and surrounds the body portion. The edge portion protrudes beyond the body portion along the thickness direction of the body portion. The lap portion of the edge portion protrudes along a direction perpendicular to the thickness direction of the body portion. The first surface of the lap portion laps the housing of the battery cell. In this way, the end cap is connected to the housing of the battery cell to improve the sealing performance of the battery cell.

All technical solutions described in the embodiments of this application are applicable to various battery-powered devices such as a mobile phone, a portable device, a laptop computer, an electric power cart, an electrical toy, an electric tool, an electric vehicle, a ship, and a spacecraft. The spacecraft includes an airplane, a rocket, a space shuttle, a spaceship, and the like.

Understandably, the technical solutions described in the embodiments of this application are not only applicable to the devices described above, but also applicable to all battery-powered devices. However, for brevity, the following embodiments are described by using an electric vehicle as an example.

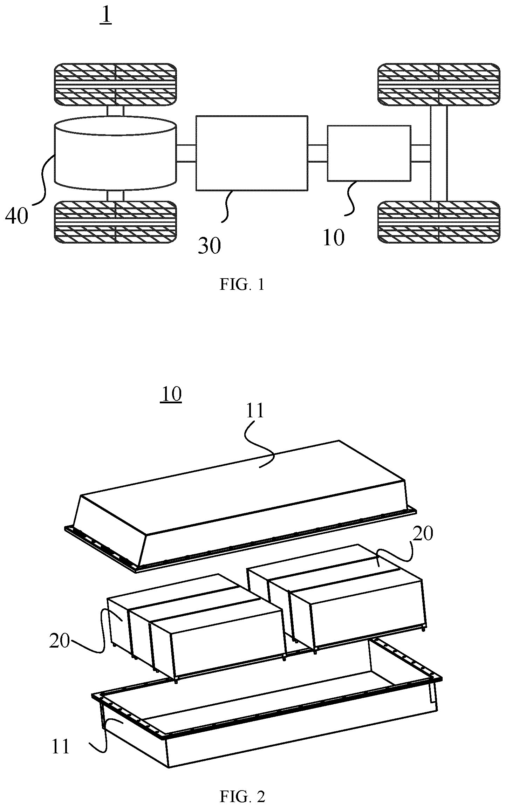

For example, as shown in FIG. 1, which is a schematic structural diagram of a vehicle 1 according to an embodiment of this application, the vehicle 1 may be an oil-fueled vehicle, a natural gas vehicle, or a new energy vehicle. The new energy vehicle may be a battery electric vehicle, a hybrid electric vehicle, a range-extended electric vehicle, or the like. A motor 40, a controller 30, and a battery 10 may be disposed inside the vehicle 1. The controller 30 is configured to control the battery 10 to supply power to the motor 40. For example, the battery 10 may be disposed at the bottom, front, or rear of the vehicle 1. The battery 10 may be configured to supply power to the vehicle 1. For example, the battery 10 may serve as an operating power supply of the vehicle 1 to power a circuit system of the vehicle 1. For example, the battery may be configured to meet operating power usage requirements of the vehicle 1 that is being started or navigated or running. In another embodiment of this application, the battery 10 serves not only as an operating power supply of the vehicle 1, but may also serve as a driving power supply of the vehicle 1 to provide driving power for the vehicle 1 in place of or partly in place of fuel oil or natural gas.

To meet different power usage requirements, the battery 10 may include a plurality of battery cells. For example, as shown in FIG. 2, which is a schematic structural diagram of a battery 10 according to an embodiment of this application, the battery 10 may include a plurality of battery cells 20. The battery 10 may further include a box 11. The interior of the box 11 is a hollow structure. A plurality of battery cells 20 are accommodated in the box 11. For example, the plurality of battery cells 20 are combined and connected in parallel, series, or series-and-parallel pattern, and then placed into the box 11.

Optionally, the battery 10 may further include other structures, details of which are omitted here. For example, the battery 10 may further include a busbar component. The busbar component is configured to implement electrical connection between the plurality of battery cells 20, such as parallel connection, series connection, or series-parallel connection. Specifically, the busbar component may implement the electrical connection between the battery cells 20 by connecting electrode terminals of the battery cells 20. Further, the busbar component may be fixed to the electrode terminals of the battery cells 20 by welding. Electrical energy of the plurality of battery cells 20 may be further led out by a conductive mechanism running through the box. Optionally, the conductive mechanism may also belong to the busbar component.

Depending on different power requirements, the number of battery cells 20 may be set to any value. A plurality of battery cells 20 may be connected in series, parallel, or series-and-parallel pattern to achieve a relatively high capacity or power. Each battery 10 may include a relatively large number of battery cells 20. Therefore, in order to facilitate mounting, the battery cells 20 may be arranged in groups. Each group of battery cells 20 forms a battery module. The number of battery cells 20 included in the battery module is not limited, and may be set as required. The battery may include a plurality of battery modules. The battery modules may be connected in series, parallel, or series-and-parallel pattern.

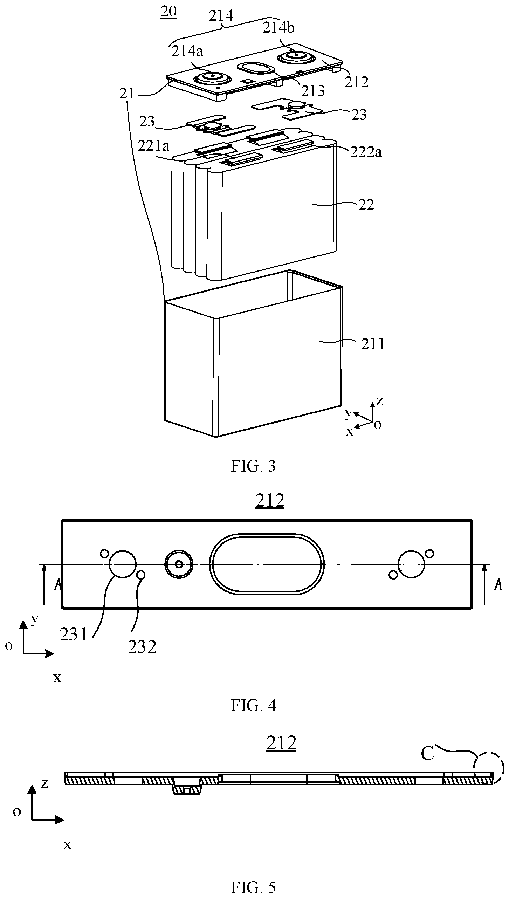

As shown in FIG. 3, which is a schematic structural diagram of a battery cell 20 according to an embodiment of this application, the battery cell 20 includes one or more electrode assemblies 22, a housing 211, and an end cap 212. The housing 211 and the end cap 212 form a shell or a battery case 21. Both the wall of the housing 211 and the end cap 212 are referred to as walls of the battery cell 20. For a cuboidal battery cell 20, the walls of the housing 211 include a bottom wall and four sidewalls. The shape of the housing 211 is determined depending on the shape of a combination of one or more electrode assemblies 22. For example, the housing 211 may be a hollow cuboid or cube or cylinder. One surface of the housing 211 is provided with an opening through which one or more electrode assemblies 22 can be placed into the housing 211 conveniently. For example, when the housing 211 is a hollow cuboid or cube, one of faces of the housing 211 is an opened face. The opened face is not walled so that the inside of the housing 211 communicates with the outside. When the housing 211 is a hollow cylinder, an end face of the housing 211 may be an opened face. That is, this end face is not walled so that the inside of the housing 211 communicates with the outside. The end cap 212 covers the opening and is connected to the housing 211 to form a closed cavity that is configured to accommodate the electrode assembly 22. The housing 211 is filled with an electrolyte such as an electrolyte solution.

The battery cell 20 may further include two electrode terminals 214. The two electrode terminals 214 may be disposed on the end cap 212. The end cap 212 is generally in the shape of a flat plate. Two electrode terminals 214 are fixed onto a flat surface of the end cap 212. The two electrode terminals 214 are a positive electrode terminal 214a and a negative electrode terminal 214b, respectively. A connecting member 23, also referred to as a current collection component 23, is disposed corresponding to each electrode terminal 214, located between the end cap 212 and the electrode assembly 22, and configured to electrically connect the electrode assembly 22 and the electrode terminal 214.

As shown in FIG. 3, each electrode assembly 22 includes a first tab 221a and a second tab 222a. The polarity of the first tab 221a is opposite to the polarity of the second tab 222a. For example, when the first tab 221a is a positive tab, the second tab 222a is a negative tab. The first tabs 221a of one or more electrode assemblies 22 are connected to one electrode terminal by one connecting member 23. The second tabs 222a of one or more electrode assemblies 22 are connected to another electrode terminal by another connecting member 23. For example, the positive electrode terminal 214a is connected to the positive tab by one connection component 23, and the negative electrode terminal 214b is connected to the negative tab by another connection component 23.

In the battery cell 20, one or more electrode assemblies 22 may be disposed depending on actual use requirements. As shown in FIG. 3, 4 independent electrode assemblies 22 are disposed in the battery cell 20.

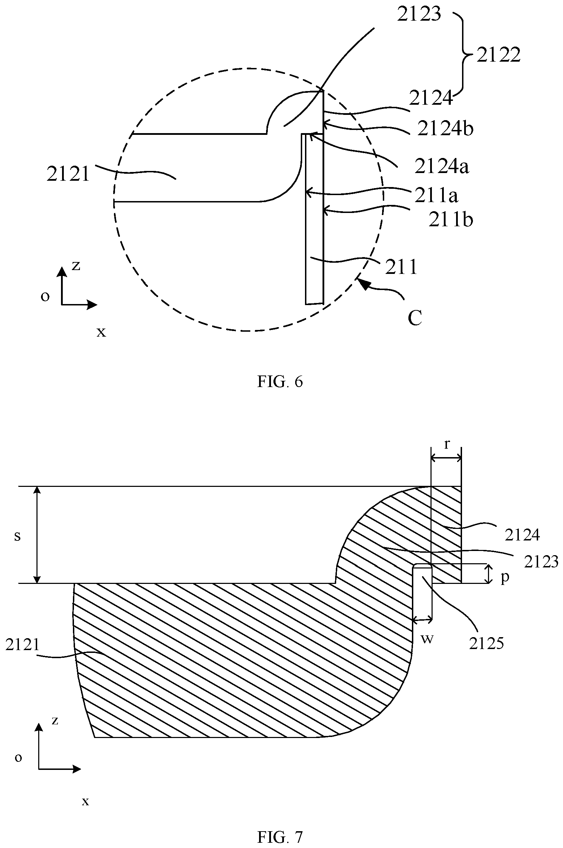

FIG. 4 is a schematic structural diagram of an end cap of a battery cell according to an embodiment of this application; FIG. 5 is a cross-sectional view of an end cap sectioned along an A-A line shown in FIG. 4; and FIG. 6 is a close-up view of a region C shown in FIG. 5. Referring to FIG. 4 to FIG. 6, the end cap 212 includes a body portion 2121 and an edge portion 2122. The edge portion 2122 is connected to the body portion 2121 and surrounds the body portion 2121. The edge portion 2122 protrudes beyond the body portion 2121 along a first direction, and the first direction is a thickness direction of the body portion 2121. The edge portion 2122 includes a lap portion 2124. The lap portion 2124 protrudes beyond the body portion 2121 along a second direction. The lap portion 2124 includes a first surface 2124a. The first surface 2124a is perpendicular to the first direction. The first surface 2124a is configured to lap a housing 211 of the battery cell 20. The second direction is perpendicular to the first direction.

The end cap 212 is configured to fit and cover the opening of the housing 211 of the battery cell 20 to form a sealed cavity that is configured to accommodate the electrode assembly 22. The end cap 212 may be a flat plate structure, such as a square flat plate or a circular flat plate. Correspondingly, the body portion 2121 is a square region or a circular region in the end cap 212.

Located at the edge of the end cap 212, the edge portion 2122 surrounds and is connected to the body portion 2121. The edge portion 2122 protrudes beyond the body portion 2121 along a first direction. The first direction is a thickness direction of the body portion 2121, and the first direction may be the z-direction.

The edge portion 2122 includes a lap portion 2124. The lap portion 2124 protrudes beyond the body portion 2121 along a second direction. The second direction may be the x-direction or the y-direction. In other words, the second direction may be a circumferential direction of the end cap 212. With the lap portion 2124 disposed, the lap portion 2124 may lap over the housing 211 to implement the connection between the lap portion 2124 and the housing 211, and in turn, implement the connection between the end cap 212 and the housing 211.

The lap portion 2124 includes a first surface 2124a. The first surface 2124a is perpendicular to the first direction. The first surface 2124a is configured to lap a housing 211 of the battery cell. The second direction is perpendicular to the first direction. Both the first surface 2124a and an upper surface of the housing 211 may be flat surfaces. The upper surface of the housing 211 may be a surface of lapping between the housing 211 and the first surface 2124a, thereby implementing the connection between the lap portion 2124 and the housing 211, and improving the sealing performance of the battery cell 20.

In this embodiment of this application, the end cap 212 of the battery cell 20 includes a body portion 2121 and an edge portion 2122. The edge portion 2122 is connected to the body portion 2121 and surrounds the body portion. The edge portion 2122 protrudes beyond the body portion 2121 along the thickness direction of the body portion 2121. The lap portion 2124 of the edge portion 2122 protrudes along a direction perpendicular to the thickness direction of the body portion 2121. The first surface 2124a of the lap portion 2124 laps the housing 211 of the battery cell 20. In this way, the end cap 212 is connected to the housing 211 of the battery cell 20 to improve the sealing performance of the battery cell 20.

Optionally, in an embodiment of this application, the lap portion 2124 further includes a second surface 2124b. The second surface 2124b is perpendicular to the first surface 2124a. When the first surface 2124a laps the housing 211, the second surface is flush with an outer surface 221 of the housing 211.

The housing 211 includes an inner surface 211a and an outer surface 211b. The inner surface 211a of the housing 211 faces the electrode assembly 22, and the outer surface 211b of the housing is farther away from the electrode assembly 22 than the inner surface 211a.

As shown in FIG. 6, the lap portion 2124 includes a second surface 2124b perpendicular to the first surface 2124a. When the first surface 2124a laps the upper surface of the housing 211, the second surface 2124b is flush with the outer surface 211b of the housing 211. In this way, it is convenient to connect the second surface 2124b to the outer surface 211b of the housing 211 along the y-direction, thereby further improving the sealing performance of the battery cell 20.

FIG. 7 is a schematic structural diagram of an end cap according to an embodiment of this application. Optionally, in an embodiment of this application, as shown in FIG. 7, a dimension r of the lap portion 2124 along the second direction and a dimension s of the lap portion along the first direction satisfy: 0.1 mm ≤ r ≤ 1 mm and 0.1 mm ≤ s ≤ 2 mm, respectively. This makes it convenient to form the lap portion 2124 by stamping, and increases the structural strength of the lap portion 2124.

Optionally, in an embodiment of this application, referring to FIG. 6 and FIG. 7, the edge portion 2122 further includes a connecting portion 2123. The connecting portion 2123 connects the body portion 2121 and the lap portion 2124. A first groove 2125 is provided at one end, close to the connecting portion 2123, of the first surface 2124a.

The connecting portion 2123 is configured to connect the body portion 2121 and the lap portion 2124. The connecting portion 2123 may be a quarter-circle structure with a smooth surface, thereby facilitating the processing of the edge portion 2122.

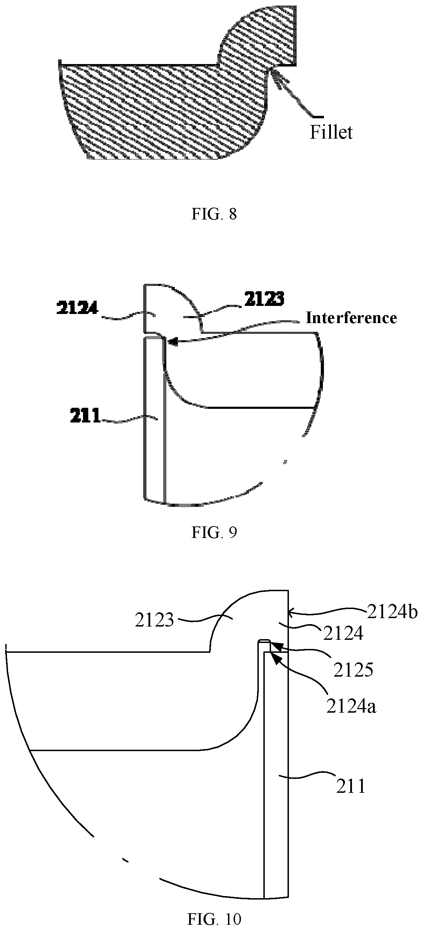

FIG. 8 is a schematic structural diagram of an end cap without a first groove according to an embodiment of this application, and FIG. 9 is a schematic diagram of interference between an end cap and a housing of a battery cell according to an embodiment of this application. As shown in FIG. 8 and FIG. 9, when the end cap 212 is formed by stamping, a fillet is formed at one end, close to the connecting portion 2123, of the first surface 2124a. The fillet interferes with the housing 211, thereby affecting the connection between the second surface 2124b and the outer surface 211b of the housing 211. For example, when the second surface 2124b is connected to the outer surface 211b of the housing 211 by welding, the interference between the second surface and the outer surface impairs the yield rate of welding.

FIG. 10 is a schematic diagram of a fit between an end cap with a first groove and a housing of a battery cell according to an embodiment of this application. As shown in FIG. 10, a first groove 2125 is provided at one end, close to the connecting portion 2123, of the first surface 2124a, so as to avoid interference between the fillet and the housing 211. The second surface 2124b can be tightly connected to the outer surface 211b of the housing 211, where the tight connection means a connection without a clearance in between, thereby improving the yield rate of connection between the second surface 2124b and the outer surface 211b, and in turn, further improving the hermeticity of the battery cell 20.

Optionally, in an embodiment of this application, a dimension w of the first groove 2125 along the second direction and the dimension p of the first groove along the first direction satisfy: 0.01 mm ≤ w ≤ 0.5 mm and 0.01 mm ≤ p ≤ 0.5 mm, respectively. This facilitates the processing of the first groove 2125 and increases the structural strength of the edge portion 2122.

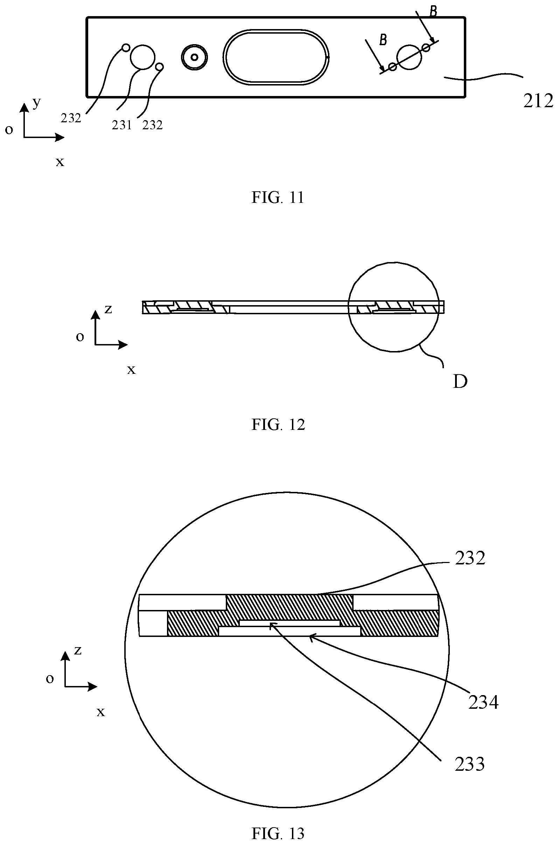

FIG. 11 is a schematic structural diagram of an end cap according to an embodiment of this application; FIG. 12 is a cross-sectional view of an end cap sectioned along a B-B line shown in FIG. 11; and FIG. 13 is a close-up view of a region D shown in FIG. 12. Optionally, in an embodiment of this application, referring to FIG. 11 to FIG. 13, the body portion 2121 includes a boss 232 protruding along the first direction. The protruding direction of the boss 232 is identical to the protruding direction of the edge portion 2122.

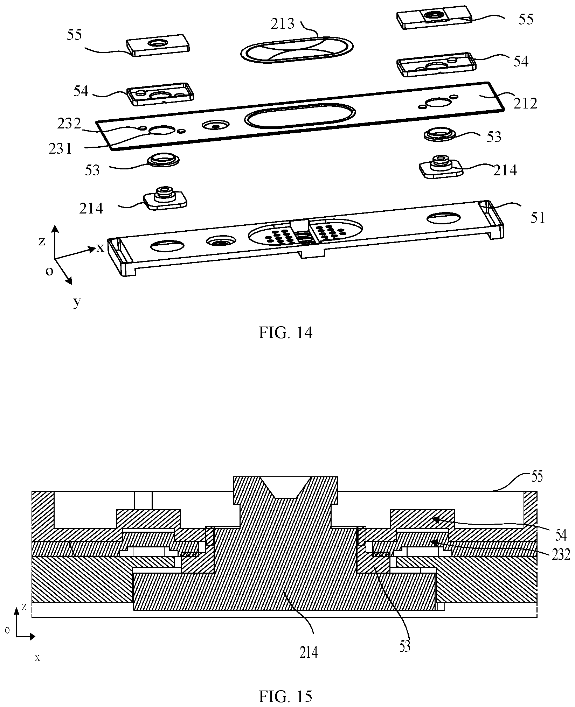

FIG. 14 is a schematic structural diagram of an end cap assembly according to an embodiment of this application. As shown in FIG. 14, the end cap assembly includes an end cap 212, a first fixing piece 55, a first insulator 54, a first sealing ring 53, and a second insulator 51. The first fixing piece 55 is configured to fix the electrode terminal 214 to the end cap 212. The first insulator 54 is disposed between the first fixing piece 55 and the electrode terminal 214, and is configured to implement insulation between the first fixing piece 55 and the electrode terminal 214. The first insulator 54 may be an upper plastic sheet, and the first fixing piece 55 may be a riveting block. The second insulator 51 is disposed between the end cap 212 and the housing 211 of the battery cell 20 to implement insulation between the end cap 212 and the housing 211 as well as insulation between the end cap 212 and the electrode assembly 22, where the second insulator 51 may be a lower plastic sheet. The electrode terminal 214 is disposed penetratingly in the through-hole 231. The first sealing ring 53 surrounds the electrode terminal 214 and seals the through-hole 231. The first sealing ring 53 may be an insulating sealing ring or a conductive sealing ring.

FIG. 15 is a cross-sectional view of an end cap assembly according to an embodiment of this application. As shown in FIG. 15, the first insulator 54 includes a second groove opposite to the boss 232. The second groove is disposed at a position of the first insulator 54, where the position corresponds to the boss 232. The second groove is configured to accommodate the boss 232. The boss 232 is snap-fitted to the second groove. In this way, along the first direction, the first insulator 54 is disposed between the first fixing piece 55 and the boss 232. Along the second direction, the two ends of the boss 232 fit the two ends of the second groove, respectively. The second groove fits the first sealing ring 53, thereby implementing the positioning of the first insulator 54 in the first direction and the second direction, and in turn, implementing the positioning of the electrode terminal 214, preventing the electrode terminal 214 from rotating or moving, and improving the performance of the battery cell 20.

Optionally, in an embodiment of this application, as shown in FIG. 14 and FIG. 15, the body portion 2121 includes a through-hole 231. The through-hole 231 is configured to accommodate an electrode terminal 214. Two bosses 232 are disposed opposite to each other along a radial direction of the through-hole 231. With two opposite bosses 232 disposed along the radial direction of the through-hole 231, the electrode terminal 214 can be further fixed in the second direction to prevent the electrode terminal 214 from rotating or being dislocated, or the like. The number of bosses 232 may be three, four, or even more, and is not particularly limited herein as long as the bosses can constrain the electrode terminal 214.

Optionally, in an embodiment of this application, as shown in FIG. 13, a third groove 233 and a fourth groove 234 corresponding to the boss 232 are provided on one side, oriented away from the boss 232, of the body portion 2121. The third groove 233 and the fourth groove 234 form a step structure. The diameter of the third groove 233 is less than the diameter of the boss 232. The diameter of the boss 232 is less than the diameter of the fourth groove 234. The above arrangement prevents the diameters of the third groove 233 and the fourth groove 234 from being the same, and in turn, avoids an excessive depth of the third groove 233 and the fourth groove 234 in the first direction and a decrease in the structural strength of the boss 232.

Optionally, in an embodiment of this application, the second surface 2124b is connected to the outer surface of the housing 21 by welding. This increases the connection strength between the second surface 2124b and the outer surface of the housing 21.

In some embodiments of this application, the end cap 212 is a steel cover with a thickness of 0.2 mm to 2 mm.

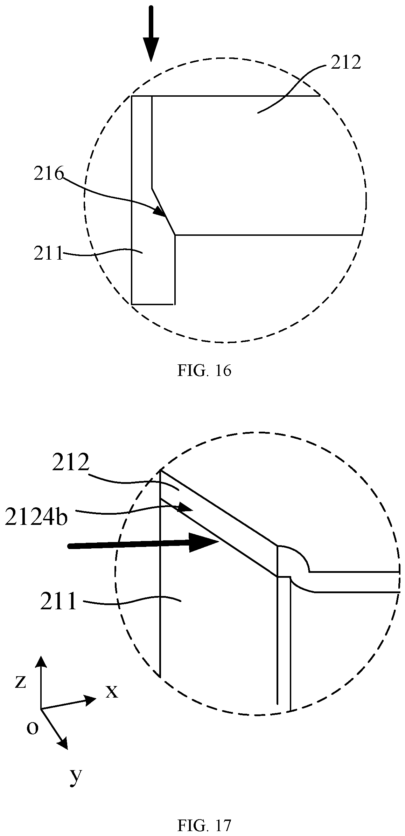

FIG. 16 is a schematic diagram of connection between a housing and an end cap in the related art. As shown in Fig. 16, in an aluminum housing 211, a supporting structure 216 may be formed in the housing 211 by a stretching process. The end cap 212 is supported on the supporting structure 216. In this way, the end cap 212 can be connected to the housing 211 by top welding along a first direction, such as the direction indicated by the arrow shown in FIG. 16.

FIG. 17 is a schematic diagram of connection between a housing and an end cap according to an embodiment of this application. When the end cap 212 is a steel cover and the housing 211 is a steel casing, it is difficult to stretch the steel casing to form a supporting platform. Therefore, it is difficult to connect, by top welding, the end cap 212 to the housing 211 that contains no supporting platform, and the sealing performance of the battery cell 20 is scarcely improved. Therefore, through the arrangement in the preceding embodiment of this application, as shown in FIG. 17, the second surface 2124b may be connected to the outer surface 211b of the housing 211 by side welding along the direction indicated by the arrow in the drawing.

The thickness of the steel end cap 212 is smaller than the thickness of the aluminum end cap 212. Therefore, a larger number of battery cells 20 containing the steel end cap 212 and the steel housing 211 can be accommodated in the space of the same volume, thereby increasing the energy density of the battery 10.

Optionally, in an embodiment of this application, the thickness of the end cap 212 is 0.8 mm. In this way, the energy density of the battery 10 can be further increased without compromising the strength of the end cap 212.

Understandably, the relevant parts in different embodiments of this application can be cross-referenced, details of which are omitted here for brevity.

An embodiment of this application further provides a battery cell 20. The battery cell includes: an electrode assembly 22; a housing 211, including an opening and configured to accommodate the electrode assembly 22; and the end cap 212 disclosed in the preceding embodiment. The end cap 212 covers the opening to seal the electrode assembly 22 in the housing 211.

Optionally, in an embodiment of this application, the housing 211 is a steel casing with a thickness of 0.2 mm to 2 mm. When the housing 211 is a steel casing, a larger number of battery cells 20 with steel casings can be accommodated in a space of the same volume due to the smaller thickness of the steel casing, thereby increasing the energy density of the battery 10.

An embodiment of this application further provides a battery. The battery includes: the battery cell 20 disclosed in the preceding embodiment; and a box 11, where the box 11 is configured to accommodate the battery cell 20.

An embodiment of this application further provides an electrical device. The electrical device includes the battery 10 disclosed in the preceding embodiment. The battery 10 is configured to provide electrical energy.

Although this application has been described with reference to exemplary embodiments, various improvements may be made to the embodiments without departing from the scope of this application, and some components described in the embodiments may be replaced with equivalents. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. An end cap of a battery cell, comprising:
a body portion (2121); and
an edge portion (2122), wherein:
the edge portion (2122) is connected to the body portion (2121) and surrounds the body portion (2121), the edge portion (2122) protrudes beyond the body portion (2121) along a first direction, and the first direction is a thickness direction of the body portion (2121);
the edge portion (2122) comprises a lap portion (2124), the lap portion (2124) protrudes beyond the body portion (2121) along a second direction, the lap portion (2124) comprises a first surface (2124a), the first surface (2124a) is perpendicular to the first direction, the first surface (2124a) is configured to lap a housing (211) of the battery cell, and the second direction is perpendicular to the first direction.

2. The end cap according to claim 1, wherein the lap portion (2124) further comprises a second surface (2124b), the second surface (2124b) is perpendicular to the first surface (2124a), and when the first surface (2124a) laps the housing (211), the second surface (2124b) is flush with an outer surface (211b) of the housing (211).

3. The end cap according to claim 1 or 2, wherein a dimension r of the lap portion (2124) along the second direction and a dimension s of the lap portion along the first direction satisfy: 0.1 mm ≤ r ≤ 1 mm and 0.1 mm ≤ s ≤ 2 mm, respectively.

4. The end cap according to any one of claims 1 to 3, wherein the edge portion (2122) further comprises a connecting portion (2123), the connecting portion (2123) connects the body portion (2121) and the lap portion (2124), and a first groove (2125) is provided at one end, close to the connecting portion (2123), of the first surface (2124a).

5. The end cap according to claim 4, wherein a dimension w of the first groove (2125) along the second direction and a dimension p of the first groove along the first direction satisfy: 0.01 mm ≤ w ≤ 0.5 mm and 0.01 mm ≤ p ≤ 0.5 mm, respectively.

6. The end cap according to any one of claims 1 to 5, wherein the body portion (2121) comprises a boss (232) protruding along the first direction, and a protruding direction of the boss (232) is identical to a protruding direction of the edge portion (2122).

7. The end cap according to claim 6, wherein the body portion (2121) comprises a through-hole (231), the through-hole (231) is configured to accommodate an electrode terminal (214), and two bosses (232) are disposed opposite to each other along a radial direction of the through-hole (231).

8. The end cap according to claim 6 or 7, wherein:
a third groove (233) and a fourth groove (234) corresponding to the boss (232) are provided on one side, oriented away from the boss (232), of the body portion (2121);
the third groove (233) and the fourth groove (234) form a step structure;
a diameter of the third groove (233) is less than a diameter of the boss (232); and
the diameter of the boss (232) is less than a diameter of the fourth groove (234).

9. The end cap according to any one of claims 2 to 8, wherein the second surface (2124b) is connected to the outer surface (211b) of the housing (211) by welding.

10. The end cap according to any one of claims 1 to 9, wherein the end cap is a steel cover with a thickness of 0.2 mm to 2 mm.

11. The end cap according to claim 10, wherein a thickness of the end cap is 0.8 mm.

12. A battery cell, comprising:
an electrode assembly (22);
a housing (211), comprising an opening and configured to accommodate the electrode assembly (22); and
the end cap according to any one of claims 1 to 11, wherein the end cap covers the opening to seal the electrode assembly (22) in the housing (211).

13. The battery cell according to claim 12, wherein the housing (211) is a steel casing with a thickness of 0.2 mm to 2 mm.

14. A battery, comprising:
the battery cell (20) according to claim 12 or 13; and
a box (11), wherein the box (11) is configured to accommodate the battery cell (20).

15. An electrical device, comprising the battery according to claim 14, wherein the battery is configured to provide electrical energy.
